# FASCICULE DE BREVET EUROPEEN

(11) **EP 2 524 169 B1**
(45) Date de publication et mention de la délivrance du brevet: **07.03.2018**
(21) Numéro de dépôt: 11704277.0
(22) Date de dépôt: 11.01.2011
(51) Int. Cl.: F23R 3/00, F23R 3/12, F23R 3/14, F23R 3/54

(54) **CHAMBRE DE COMBUSTION MULTI-PERCEE A ECOULEMENTS TANGENTIELS CONTRE GIRATOIRES**
BRENNKAMMER MIT MEHREREN BOHRUNGEN UND GEGENDREHENDEN TANGENTIALFLÜSSEN
MULTI-BORED COMBUSTION CHAMBER HAVING COUNTER-ROTATING TANGENTIAL FLOWS

(30) Priorité: 15.01.2010 FR 1050257
(43) Date de publication de la demande: 21.11.2012
(73) Titulaire: Safran Helicopter Engines, 64510 Bordes (FR)
(72) Inventeur: CARRERE, Bernard, Joseph, Jean-Pierre, F-64000 Pau (FR); DUBOURDIEU-RAYROT, Jean-Marc, F-64230 Mazerolles (FR); HERNANDEZ, Lorenzo, Huacan, F-64000 Pau (FR); SERROT-GRACIE, Robert, F-65800 Aureilhan (FR)
(74) Mandataire: Milien, Jean-Baptiste Aurélien
(86) Numéro de dépôt international: PCT/FR2011/050046
(87) Numéro de publication internationale: WO 2011/086320

(56) Documents cités:
- US-A- 5 129 231
- US-A- 5 918 467
- US-A- 5 956 955
- US-A1- 2006 042 263
- US-A1- 2006 272 335

## Description

La présente invention concerne le domaine des chambres de combustion, notamment pour les turbomachines.

La présente invention concerne plus précisément une chambre de combustion, notamment de turbomoteur, présentant une géométrie annulaire autour d'un axe, une paroi annulaire interne, une paroi annulaire externe et un fond de chambre annulaire s'étendant autour dudit axe, ledit fond de chambre s'étendant radialement entre la paroi annulaire interne et la paroi annulaire externe, le fond de chambre étant pourvu d'au moins une ouverture destinée à recevoir un injecteur de carburant, cette ouverture étant sensiblement centrée sur une ligne circulaire délimitant une première partie de fond de chambre s'étendant radialement entre la ligne circulaire et la paroi annulaire interne, et une seconde partie de fond de chambre s'étendant radialement entre la ligne circulaire et la paroi annulaire externe, chambre de combustion dans laquelle une pluralité de premiers canaux sont ménagés dans la première partie de fond de chambre, et dans laquelle une pluralité de deuxièmes canaux sont ménagés dans la seconde partie de fond de chambre.

Ce type de chambre de combustion est bien connu, un exemple étant décrit dans le document FR 2 733 582. Une chambre de combustion ayant les caractéristiques du préambule de la revendication 1 est connue du document US 2006/272335. Il est en effet connu de percer le fond de chambre à l'aide d'une pluralité de canaux afin de permettre un écoulement d'un fluide de refroidissement à l'intérieur de la chambre de combustion. Ce fluide de refroidissement, généralement de l'air provenant du compresseur, vient lécher la surface intérieure des parois annulaires interne et externe de manière à créer un film d'air protecteur.

Dans un mode de réalisation connu, les premiers canaux sont orientés radialement de manière que le fluide de refroidissement vienne lécher la surface intérieure de la paroi annulaire interne, tandis que les deuxièmes canaux sont orientés radialement de manière que le fluide de refroidissement vienne lécher la surface intérieure de la paroi annulaire externe.

Une telle configuration des canaux est très avantageuse pour le refroidissement des parois annulaires externe et interne.

Cependant, le plus souvent, l'injecteur de carburant est associé à un tourbillonneur qui génère un vortex d'air centré sur l'ouverture. On comprend donc que la giration de l'air provenant du tourbillonneur est très perturbée par les écoulements radiaux issus des canaux.

En outre, cette configuration nécessite de ménager alternativement des premiers et deuxième canaux sur la ligne circulaire, c'est-à-dire sur un même diamètre. Le faible pont matière entre les canaux ménagés le long de cette ligne circulaire exige une grande précision de fabrication, engendre des risques importants de rebuts et qui plus est, fragilise la tenue mécanique du fond de chambre.

Un objet de la présente invention est de proposer une chambre de combustion qui remédie aux inconvénients mentionnés ci-dessus. Les premiers et deuxièmes canaux sont inclinés par rapport à un vecteur normal au fond de chambre tout en s'étendant tangentiellement, et par le fait que les premiers canaux sont agencés de manière à permettre un écoulement d'air autour de l'axe de la chambre de combustion selon un premier sens giratoire, tandis que les deuxièmes canaux sont agencés de manière à permettre un écoulement d'air autour de l'axe de la chambre de combustion selon un second sens giratoire opposé au premier sens giratoire. L'invention atteint son but par le fait que la largeur radiale de l'écoulement selon le premier sens giratoire est sensiblement égale à la largeur radiale de la première partie de fond tandis que la largeur radiale de l'écoulement selon le second sens giratoire est sensiblement égale à la largeur radiale de la seconde partie de fond. Autrement dit, les premiers et deuxièmes canaux sont inclinés par rapport à un plan orthogonal audit axe.

On comprend donc que les premiers et deuxièmes canaux permettent de créer deux flux d'air giratoires tournant en sens opposés autour de l'axe de la chambre de combustion.

Grâce à l'invention, il n'est plus nécessaire de ménager des premiers et seconds canaux de manière alternative sur la ligne circulaire de sorte que la tenue mécanique de la chambre de combustion est améliorée.

Dans le mode de réalisation préférentiel où la chambre de combustion comporte en outre au moins un tourbillonneur coopérant avec l'ouverture en vu d'être monté avec l'injecteur de carburant, le tourbillonneur est agencé de manière à générer un écoulement d'air rotatif autour de l'ouverture, et donc autour de l'injecteur, en phase avec les premier et second sens giratoires.

Autrement dit, contrairement à l'art antérieur, les écoulements d'air giratoires créés par les premiers et deuxièmes canaux sont en phase avec l'écoulement d'air tourbillonnant générés par le tourbillonneur.

On comprend donc que ces écoulements giratoires accompagnent avantageusement l'écoulement d'air créé par le tourbillonneur. Un intérêt est d'améliorer l'efficacité de chacun des injecteurs de la chambre de combustion, grâce à quoi, pour une chambre de combustion donnée, il est avantageusement possible de diminuer le nombre d'injecteurs. On diminue alors le coût et la masse de la chambre de combustion.

Avantageusement, les premiers et deuxièmes canaux sont inclinés par rapport audit vecteur normal (ou au plan perpendiculaire à l'axe), d'un angle compris, en valeur absolue, entre 10 et 40°.

Selon une variante, une pluralité de troisièmes canaux sont ménagés dans la première partie de fond, lesdits troisièmes canaux étant inclinés par rapport au vecteur normal (ou au plan perpendiculaire à l'axe) tout en s'étendant radialement. De préférence, les troisièmes canaux sont agencés de manière à permettre un écoulement d'air radial sensiblement centripète. Encore de préférence, les troisièmes canaux sont disposés à proximité de la paroi annulaire interne.

Selon cette variante, une pluralité de quatrièmes canaux sont ménagés dans la seconde partie de fond, lesdits quatrièmes canaux étant inclinés par rapport au vecteur normal (ou au plan perpendiculaire à l'axe) tout en s'étendant radialement. De préférence, les quatrièmes canaux sont agencés de manière à permettre un écoulement d'air radial sensiblement centrifuge. Encore de préférence, les quatrièmes canaux sont disposés à proximité de la paroi annulaire externe.

La présente invention porte en outre sur une turbomachine, notamment d'aéronef, comportant une chambre de combustion selon l'invention.

L'invention sera mieux comprise et ses avantages apparaîtront mieux à la lecture de la description qui suit, de deux modes de réalisation indiqués à titre d'exemples non limitatifs. La description se réfère aux dessins annexés sur lesquels :
- la figure **1** est une vue en coupe partielle d'une turbomachine d'aéronef comprenant une chambre de combustion annulaire selon la présente invention ;
- la figure **1A** est une vue de détail de la figure **1** représentant une portion de la chambre de combustion sans les injecteurs ;
- la figure **2** représente le fond de chambre de la chambre de combustion de la figure **1A** dans lequel sont ménagés des premiers et deuxièmes canaux, où l'on a illustré les écoulements d'air générés par les premiers et deuxièmes canaux, ainsi que l'écoulement tourbillonnaire généré par le tourbillonneur ;
- la figure **3A** est une vue en coupe partielle prise selon le plan IIIA tangentiel et perpendiculaire au fond de chambre, montrant deux premiers canaux ménagés dans l'épaisseur de la première partie de fond de chambre ;
- la figure **3B** est une vue en coupe partielle prise selon un plan IIIB tangentiel et perpendiculaire au fond de chambre, montrant deux deuxièmes canaux ménagés dans l'épaisseur de la seconde partie de fond de chambre ; et
- la figure **4** représente une variante du fond de chambre de la figure **2**, présentant en outre des troisièmes et quatrièmes canaux ménagés dans le fond de chambre afin de générer des écoulements d'air radiaux.

La chambre de combustion selon l'invention va maintenant être décrite en référence à un mode de réalisation particulier, et non limitatif, dans lequel ladite chambre est montée dans une turbomachine **10** d'aéronef, en l'espèce un hélicoptère.

De manière connue en soi, la turbomachine **10** comporte un générateur de gaz **12** comportant une roue de compresseur centrifuge **14** destinée à générer un flux d'air comprimé. Ce flux d'air est amené dans un chambre de combustion **100** conforme à l'invention pour y être mélangé avec du carburant. Ce mélange est ensuite brûlé dans la chambre de combustion, le flux de gaz brûlés en résultant permettant d'entrainer en rotation une turbine haute pression **16** ainsi qu'une turbine libre **18.**

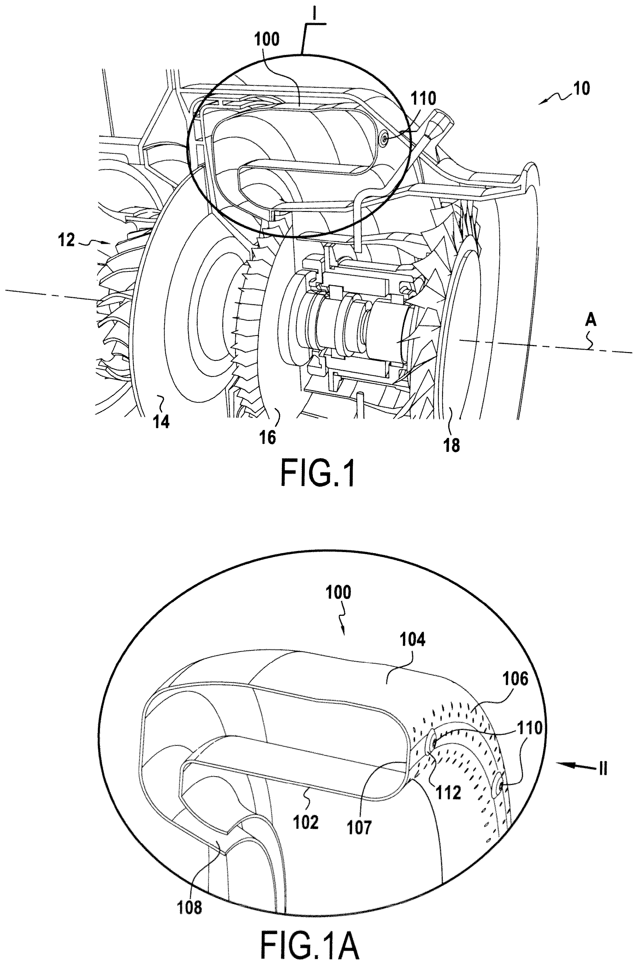

Comme on le voit sur la figure **1**, la chambre de combustion **100** présente une géométrie annulaire autour d'un axe **A**, cet axe correspondant substantiellement à l'axe de rotation des turbines **16** et **18**.

En se référant à la figure **1A**, on constate que la chambre de combustion **100** comporte une paroi annulaire interne **102**, une paroi annulaire externe **104**, ainsi qu'un fond de chambre **106**, ces éléments délimitant le volume intérieure de la chambre de combustion **100.** Par ailleurs, la chambre de combustion **100** comporte en outre une sortie **108** pour l'expulsion des gaz brûlés. On constate au demeurant que cette chambre de combustion **100** est du type « à écoulement inversé ». L'entrée de l'air comprimé dans la chambre de combustion se fait notamment par le fond de chambre.

Considérée par rapport à l'axe **A**, la paroi annulaire externe **104** présente une hauteur radiale supérieure à celle de la paroi annulaire interne **102.** En outre, les parois annulaires externe et interne sont sensiblement concentriques.

Comme on le comprend à l'aide de la figure **1A**, le fond de chambre **106** s'étend radialement entre la paroi annulaire interne **102** et la paroi annulaire externe **104.** C'est par le fond de chambre **106** que le carburant est injecté dans la chambre de combustion **100**, à l'aide d'injecteurs de carburant (non représentés ici) bien connus par ailleurs.

Ces injecteurs de carburant sont montés dans des ouvertures **110** traversant axialement le fond de chambre **106.**

Dans ce mode de réalisation, les ouvertures **110** sont équipées de tourbillonneurs **112**, connus par ailleurs, qui permettent de créer un écoulement d'air tourbillonnaire autour des injecteurs de carburant, afin de faciliter le mélange air/carburant.

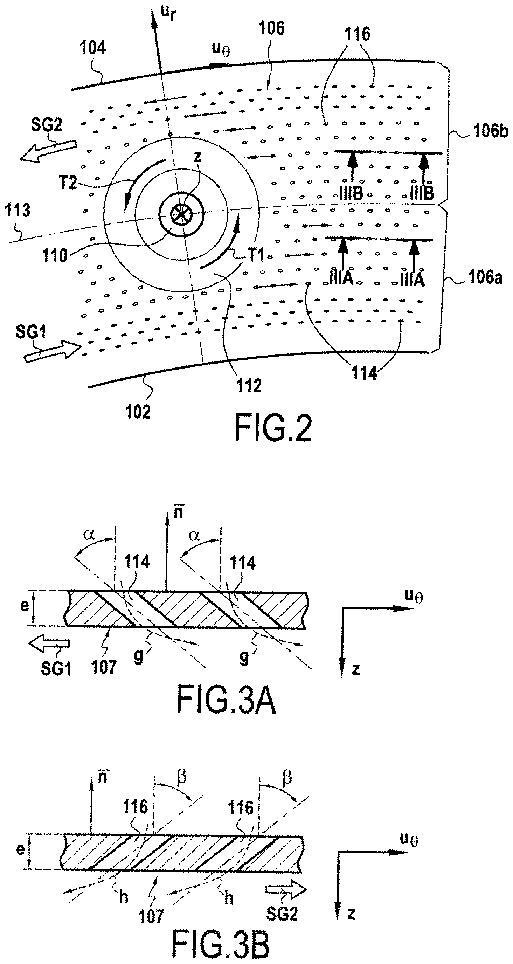

On se réfère maintenant à la figure **2**, qui est une vue de détail du fond de chambre **106** vu axialement depuis l'extérieur de la chambre de combustion **100.**

Pour faciliter la compréhension de l'invention, on définit le référentiel (uᵣ,u_{θ},z) par rapport à l'axe **A** de la chambre de combustion, où uᵣ est un vecteur radial, u_{θ} est un vecteur orthoradial et z un axe parallèle à l'axe **A.** L'ouverture **110** est centrée sur une ligne circulaire **113** centré sur l'axe **A** et qui délimite radialement une première partie de fond de chambre **106a** s'étendant radialement entre cette ligne circulaire **113** et la paroi annulaire interne **102**, et une seconde partie de fond de chambre **106** s'étendant radialement entre la ligne circulaire **113** et la paroi annulaire externe **104**, les première et seconde parties de fond de chambre s'étendent donc annulairement autour de l'axe **A.**

Comme on peut le voir sur la figure **2**, cette ligne circulaire **114** est de préférence située radialement à mi-distance des parois annulaires externe **104** et interne **102.**

La première partie de fond de chambre **106a** est percée d'une pluralité de premiers canaux **114** traversant l'épaisseur **e** du fond de chambre **106.** Par ailleurs, la seconde partie de fond de chambre **106b** est également percée d'une pluralité de deuxièmes canaux **116** traversant l'épaisseur **e** du fond de chambre **106.** Comme indiqué ci-dessus, ces premiers et deuxièmes canaux participent au refroidissement des parois annulaires externe et interne, et du fond de chambre **106** de la chambre de combustion **100.** Les premiers et deuxièmes canaux 114,116 sont inclinés par rapport à un vecteur **n** normal à la surface extérieure du fond de chambre **106.** Qui plus est, les premiers et deuxièmes canaux **114**,**116** s'étendent selon une direction tangentielle (azimutale), c'est-à-dire selon une direction parallèle au vecteur orthoradial u_{θ}.

Ainsi, au sens de l'invention, la projection de chacun des premiers et deuxièmes canaux dans un plan orthogonal à l'axe **A** est tangente à un cercle centré sur l'axe **A.**

En se référant à la figure **3****A,** qui est une vue en coupe de l'épaisseur axiale de la première partie de fond de chambre **106a,** on constate que les premiers canaux **114** sont inclinés d'un angle **α**, par rapport au vecteur **n,** et permettent de guider l'air de refroidissement vers l'intérieur de la chambre de combustion **100.** Cet écoulement, matérialisé par les flèches **g**, vient lécher la surface intérieure **107** du fond de chambre de manière à créer un film protecteur sur ladite surface intérieure.

On pourra choisir un angle d'inclinaison compris entre 10 et 40°.

En outre, on comprend à l'aide de la figure **3****A** que les premiers canaux **114** sont agencés de manière que l'écoulement **g** soit orienté selon le sens du vecteur u_{θ}, en conséquence de quoi, l'ensemble des premiers canaux **114** est apte à générer un écoulement selon un premier sens giratoire **SG1.** Dans cet exemple, le premier sens giratoire **SG1** est dirigé dans le sens horaire. L'écoulement **g** tourne donc autour de l'axe **A** et donc autour de l'axe de rotation des turbines **16** et **18.**

En se référant maintenant à la figure **3B****,** qui est une vue en coupe de l'épaisseur axiale de la première partie de fond de chambre **106b,** on constate que les deuxièmes canaux **114** sont inclinés d'un angle **β**, par rapport au vecteur **n**, et permettent de guider l'air de refroidissement vers l'intérieur de la chambre de combustion **100.** On pourra également choisir un angle d'inclinaison **β** compris entre 20 et 40°. De préférence, β = -α. Autrement dit, les angles **α** et **β** sont égaux en valeur absolue.

En outre, on comprend à l'aide de la figure **3B** que les deuxièmes canaux **116** sont agencés de manière que l'écoulement **h** soit orienté selon un sens opposé à celui du vecteur u_{θ}, en conséquence de quoi, l'ensemble des deuxièmes canaux **116** est apte à générer un écoulement selon un second sens giratoire **SG2** opposé au premier sens giratoire **SG1.** Dans cet exemple, le second sens giratoire **SG2** est donc dirigé dans le sens antihoraire. L'écoulement **h** tourne donc autour de l'axe **A**, donc autour de l'axe des turbines **16** et **18.** Selon l'invention, la largeur radiale de l'écoulement selon le premier sens giratoire **SG1** est sensiblement égale à la hauteur radiale de la distribution des premiers canaux **114.** Dans cet exemple, cette largeur radiale correspond sensiblement à la largeur radiale de la première partie de fond **106a.** Similairement, la largeur radiale de l'écoulement selon le second sens giratoire **SG2** est sensiblement égale à la hauteur radiale de la distribution des deuxièmes canaux **116.** Dans cet exemple, cette largeur radiale correspond sensiblement à la largeur radiale de la seconde partie de fond **106b.**

Les premiers et seconds canaux présentent une distribution annulaire autour de l'axe de la chambre de combustion, ladite distribution étant préférentiellement radialement localisée autour de la ligne circulaire **113**, c'est-à-dire globalement au milieu du fond de chambre annulaire.

Sur la figure **2**, on a également illustré par les flèches **T1** et **T2**, le sens giratoire du flux d'air tourbillonnaire généré par le tourbillonneur **112.** Ce flux d'air tourbillonnaire est un vortex centré sur l'axe **z,** orienté selon le sens antihoraire.

La flèche **T1** schématise l'écoulement tourbillonnaire au niveau de la première partie de fond **106a,** tandis que la flèche **T2** schématise l'écoulement tourbillonnaire au niveau de la seconde partie de fond **106.**

En se référant à la figure **2**, on comprend que l'écoulement selon le premier sens giratoire **SG1** est en phase avec l'écoulement tourbillonnaire **T1,** tandis que l'écoulement selon le second sens giratoire **SG2** est en phase avec l'écoulement tourbillonnaire **T1.**

Par conséquent, on comprend que, selon la présente invention, les écoulements d'air de refroidissement générés par les premiers et deuxièmes canaux **114**,**116** sont en phase avec le sens de l'écoulement tourbillonnaire **T1/T2** généré par le tourbillonneur **112.** Il s'ensuit que les écoulements générés par les premiers et deuxièmes canaux aident et renforcent, de manière avantageuse, l'écoulement tourbillonnaire. L'efficacité des injecteurs/tourbillonneurs est alors nettement améliorée. Un intérêt est donc de pouvoir diminuer le nombre d'injecteurs et de tourbillonneurs afin de réduire la masse et le cout du système de combustion.

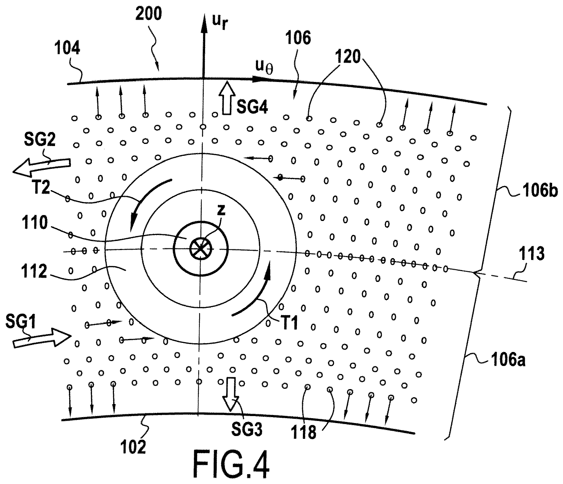

Sur la figure **4**, on a représenté une variante d'une chambre de combustion **200** selon l'invention.

Cette chambre de combustion **200** se distingue de la chambre de combustion **100** de la figure **2** par le fait qu'elle comporte en outre une pluralité de troisièmes canaux **118** et une pluralité de quatrièmes canaux **120.**

Les troisièmes canaux **118** sont ménagés dans l'épaisseur axiale de la première partie de fond de chambre **106a.** Ils sont inclinés par rapport au vecteur normal **n**, mais à la différence des premiers canaux, ils s'étendent radialement de manière à permettre un écoulement d'air radial centripète. En d'autres termes, les troisièmes canaux **118** sont agencés pour générer un écoulement à l'intérieur de la chambre de combustion selon un sens radial **SG3** opposé au sens du vecteur uᵣ.

Dans cet exemple, les troisièmes canaux **118** sont disposés à proximité de la paroi annulaire interne. Plus précisément, ils sont répartis selon au moins une rangée annulaire adjacente à la paroi annulaire interne **102.** Le flux d'air radial généré par les troisièmes canaux permet d'améliorer le refroidissement de la surface intérieure de la paroi annulaire interne **102.** Qui plus est, ce flux d'air radial **SG3** étant généré à distance du tourbillonneur **112**, il ne perturbe pas l'écoulement tourbillonnaire **T1.**

Les quatrièmes canaux **120** sont quant à eux ménagés dans l'épaisseur axiale de la seconde partie de fond de chambre **106b.** Ils sont inclinés par rapport au vecteur normal **n**, mais à la différence des deuxièmes canaux, ils s'étendent radialement de manière à permettre un écoulement d'air radial centrifuge. En d'autres termes, les quatrièmes canaux **120** sont agencés pour générer un écoulement d'air à l'intérieur de la chambre de combustion selon un sens radial **SG4** correspondant au sens du vecteur uᵣ.

Dans cet exemple, les quatrièmes canaux **120** sont disposés à proximité de la paroi annulaire externe **104.** Plus précisément, ils sont répartis selon au moins une rangée annulaire adjacente à la paroi annulaire externe **104.** Le flux d'air radial généré par les quatrièmes canaux permet d'améliorer le refroidissement de la surface intérieure de la paroi annulaire externe **104.** Qui plus est, ce flux d'air radial **SG4** étant généré à distance du tourbillonneur **112**, il ne perturbe pas l'écoulement tourbillonnaire **T2.**

## Revendications

1. Chambre de combustion (100,200), notamment de turbomoteur, présentant une géométrie annulaire autour d'un axe (A), une paroi annulaire interne (102), une paroi annulaire externe (104), et un fond de chambre annulaire (106) s'étendant autour dudit axe, ledit fond de chambre s'étendant radialement entre la paroi annulaire interne et la paroi annulaire externe, le fond de chambre étant pourvu d'au moins une ouverture (110) destinée à recevoir un injecteur de carburant, cette ouverture étant sensiblement centrée sur une ligne circulaire (113) délimitant une première partie de fond de chambre (106a) s'étendant radialement entre la ligne circulaire et la paroi annulaire interne, et une seconde partie de fond de chambre (106b) s'étendant radialement entre la ligne circulaire et la paroi annulaire externe, chambre de combustion dans laquelle une pluralité de premiers canaux (114) sont ménagés dans la première partie de fond de chambre, et dans laquelle une pluralité de deuxièmes canaux (116) sont ménagés dans la seconde partie de fond de chambre, les premiers et deuxièmes canaux sont inclinés par rapport à un vecteur (n) normal au fond de chambre tout en s'étendant tangentiellement, les premiers canaux sont agencés de manière à permettre un écoulement d'air autour de l'axe de la chambre de combustion selon un premier sens giratoire (SG1), tandis que les deuxièmes canaux sont agencés de manière à permettre un écoulement d'air autour de l'axe de la chambre de combustion selon un second sens giratoire (SG2) opposé au premier sens giratoire, la chambre de combustion étant **caractérisée en ce que** la largeur radiale de l'écoulement selon le premier sens giratoire (SG1) est sensiblement égale à la largeur radiale de la première partie de fond (106a) tandis que la largeur radiale de l'écoulement selon le second sens giratoire (SG2) est sensiblement égale à la largeur radiale de la seconde partie de fond (106b).

2. Chambre de combustion selon la revendication **1**, **caractérisée en ce qu'**elle comporte en outre au moins un tourbillonneur (112) coopérant avec l'ouverture, le tourbillonneur étant agencé de manière à générer un écoulement d'air rotatif (T1, T2) autour de l'ouverture en phase avec les premier et second sens giratoires.

3. Chambre de combustion selon la revendication **1** ou **2**, **caractérisée en ce que** les premiers et deuxièmes canaux (114, 116) sont inclinés par rapport au vecteur d'un angle (α, β) compris entre 10 et 40°.

4. Chambre de combustion selon l'une quelconque des revendications **1** à **3**, **caractérisée en ce qu'**une pluralité de troisièmes canaux (118) sont ménagés dans la première partie de fond, lesdits troisièmes canaux étant inclinés par rapport au vecteur tout en s'étendant radialement.

5. Chambre de combustion selon la revendication **4**, **caractérisée en ce que** les troisièmes canaux (118) sont agencés de manière à permettre un écoulement d'air radial sensiblement centripète (SG3).

6. Chambre de combustion selon la revendication **4** ou **5**, **caractérisée en ce que** les troisièmes canaux (118) sont disposés à proximité de la paroi annulaire interne.

7. Chambre de combustion selon l'une quelconque des revendications **1** à **6**, **caractérisée en ce qu'**une pluralité de quatrième canaux (120) sont ménagés dans la seconde partie de fond (106b), lesdits quatrièmes canaux étant inclinés par rapport au vecteur tout en s'étendant radialement.

8. Chambre de combustion selon la revendication **7**, **caractérisée en ce que** les quatrième canaux (120) sont agencés de manière à permettre un écoulement d'air radial sensiblement centrifuge.

9. Chambre de combustion selon la revendication **7** ou **8**, **caractérisée en ce que** les quatrièmes canaux (120) sont disposés à proximité de la paroi annulaire externe (104).

10. Turbomachine (10) d'aéronef **caractérisée en ce qu'**elle comporte une chambre de combustion (100,200) selon l'une quelconque des revendications **1** à **9.**

## Patentansprüche

1. Brennkammer (100, 200), insbesondere eines Turbinentriebwerks, mit einer ringförmigen Geometrie um eine Achse (A) herum, einer ringförmigen Innenwand (102), einer ringförmigen Außenwand (104) und einem ringförmigen Kammerboden (106), die sich um diese Achse erstrecken, wobei der Kammerboden sich radial zwischen der ringförmigen Innenwand und der ringförmigen Außenwand erstreckt, wobei der Kammerboden mit mindestens einer Öffnung (110) zur Aufnahme einer Kraftstoffeinspritzdüse versehen ist, wobei diese Öffnung im Wesentlichen auf einer kreisförmigen Linie (113) zentriert ist, die einen ersten Kammerbodenabschnitt (106a), der sich radial zwischen der kreisförmigen Linie und der ringförmigen Innenwand erstreckt, und einen zweiten Kammerbodenabschnitt (106b), der sich radial zwischen der kreisförmigen Linie und der ringförmigen Außenwand erstreckt, abgrenzt, wobei in der Brennkammer eine Vielzahl von ersten Kanälen (114) in dem ersten Kammerbodenabschnitt vorgesehen sind und eine Vielzahl von zweiten Kanälen (116) in dem zweiten Kammerbodenabschnitt vorgesehen sind, wobei die ersten und zweiten Kanäle relativ zu einem Normalvektor (n) am Kammerboden geneigt sind, während sie sich tangential erstrecken, wobei die ersten Kanäle so angeordnet sind, dass Luft um die Brennkammerachse in einer ersten Umlaufrichtung (SG1) strömen kann, während die zweiten Kanäle so angeordnet sind, dass Luft um die Brennkammerachse in einer zweiten Umlaufrichtung (SG2) entgegengesetzt zur ersten Umlaufrichtung strömen kann, wobei die Brennkammer **dadurch gekennzeichnet ist, dass** die radiale Breite der Strömung in der ersten Umlaufrichtung (SG1) im Wesentlichen gleich der radialen Breite des ersten Bodenabschnitts (106a) ist, während die radiale Breite der Strömung in der zweiten Umlaufrichtung (SG2) im Wesentlichen gleich der radialen Breite des zweiten Bodenabschnitts (106b) ist.

2. Brennkammer gemäß Anspruch 1, **dadurch gekennzeichnet, dass** sie ferner mindestens einen Drallerzeuger (112) aufweist, der mit der Öffnung zusammenwirkt, wobei der Drallerzeuger so angeordnet ist, dass ein rotierender Luftstrom (T1, T2) um die Öffnung in Phase mit der ersten und zweiten Umlaufrichtung erzeugt wird.

3. Brennkammer gemäß Anspruch 1 oder 2, **dadurch gekennzeichnet, dass** die ersten und zweiten Kanäle (114, 116) relativ zu dem Vektor mit einem Winkel (α, β) zwischen 10 und 40° geneigt sind.

4. Brennkammer gemäß einem der Ansprüche 1 bis 3, **dadurch gekennzeichnet, dass** eine Vielzahl von dritten Kanälen (118) in dem ersten Bodenabschnitt ausgebildet sind, wobei die dritten Kanäle relativ zu dem Vektor geneigt sind, während sie sich radial erstrecken.

5. Brennkammer gemäß Anspruch 4, **dadurch gekennzeichnet, dass** die dritten Kanäle (118) so angeordnet sind, dass sie einen im Wesentlichen zentripetalen radialen Luftstrom (SG3) ermöglichen.

6. Brennkammer gemäß Anspruch 4 oder 5, **dadurch gekennzeichnet, dass** die dritten Kanäle (118) nahe der ringförmigen Innenwand angeordnet sind.

7. Brennkammer gemäß einem der Ansprüche 1 bis 6, **dadurch gekennzeichnet, dass** eine Vielzahl von vierten Kanälen (120) in dem zweiten Bodenabschnitt (106b) ausgebildet sind, wobei die vierten Kanäle relativ zu dem Vektor geneigt sind, während sie sich radial erstrecken.

8. Brennkammer gemäß Anspruch 7, **dadurch gekennzeichnet, dass** die vierten Kanäle (120) so angeordnet sind, dass sie einen im Wesentlichen zentrifugalen radialen Luftstrom ermöglichen.

9. Brennkammer gemäß Anspruch 7 oder 8, **dadurch gekennzeichnet, dass** die vierten Kanäle (120) nahe der ringförmigen Außenwand (104) angeordnet sind.

10. Turbomaschine (10) für Flugzeuge, **dadurch gekennzeichnet, dass** sie eine Brennkammer (100, 200) gemäß einem der Ansprüche 1 bis 9 aufweist.

## Claims

1. A combustion chamber (100, 200), in particular for a turbomachine, presenting an annular shape about an axis (A), an inner annular wall (102), an outer annular wall (104), and an annular chamber end wall (106) extending around said axis, said chamber end wall extending radially between the inner annular wall and the outer annular wall, the chamber end wall being provided with at least one opening (110) for receiving a fuel injector, said opening being substantially centered on a circular line (113) defining a first chamber end wall portion (106a) extending radially between the circular line and the inner annular wall, and a second chamber end wall portion (106b) extending radially between the circular line and the outer annular wall, in which combustion chamber a plurality of first channels (114) are formed in the first chamber end wall portion and a plurality of second channels (116) are formed in the second chamber end wall portion, the first and second channels are inclined relative to a normal vector (**n**) normal to the chamber end wall while extending tangentially, the first channels are arranged in such a manner as to enable air to flow around the axis of the combustion chamber in a first rotary direction (SG1) while the second channels are arranged in such a manner as to enable air to flow around the axis of the combustion chamber in a second rotary direction (SG2) opposite to the first rotary direction, the combustion chamber being **characterized in that** the radial width of the flow in the first rotary direction (SG1) is substantially equal to the radial width of the first chamber end wall portion (106a) while the radial width of the flow in the second rotary direction is substantially equal to the radial width of the second end wall portion (106b).

2. A combustion chamber according to claim 1, **characterized in that** it further includes at least one swirler (112) co-operating with the opening, the swirler being arranged in such a manner as to generate a rotary air flow (T1, T2) around the opening in phase with the first and second rotary directions.

3. A combustion chamber according to claim 1 or claim 2, **characterized in that** the first and second channels (114, 116) are inclined relative to the vector at an angle (α, β) lying in the range 10° to 40°.

4. A combustion chamber according to any one of claims 1 to 3, **characterized in that** a plurality of third channels (118) are formed in the first end wall portion, said third channels being inclined relative to the vector while extending radially.

5. A combustion chamber according to claim 4, **characterized in that** the third channels (118) are arranged in such a manner as to provide a substantially centripetal radial flow of air (SG3).

6. A combustion chamber according to claim 4 or claim 5, **characterized in that** the third channels (118) are arranged in the proximity of the inner annular wall.

7. A combustion chamber according to any one of claims 1 to 6, **characterized in that** a plurality of fourth channels (120) are provided in the second end wall portion (106b), said fourth channels being inclined relative to the vector while extending radially.

8. A combustion chamber according to claim 7, **characterized in that** the fourth channels (120) are arranged in such a manner as to provide a substantially centrifugal radial flow of air.

9. A combustion chamber according to claim 7 or claim 8, **characterized in that** the fourth channels (120) are arranged in the proximity of the outer annular wall (104).

10. An aircraft turbomachine (10), **characterized in that** it includes a combustion chamber (100, 200) according to any one of claims 1 to 9.
